(19)

Europäisches
Patentamt
European
Patent Office
Office européen
des brevets

(11) **EP 3 483 194 A1**

(12) **EUROPEAN PATENT APPLICATION**

(43) Date of publication:
**15.05.2019 Bulletin 2019/20**

(51) Int Cl.:
**C08G 18/00** (2006.01)    **C08L 75/04** (2006.01)

(21) Application number: **17201706.3**

(22) Date of filing: **14.11.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Covestro Deutschland AG
51373 Leverkusen (DE)**

(72) Inventors:
• **Deng, Zoe**
  **201206 Shanghai (CN)**
• **Zhao, Dong Bo**
  **201206 Shanghai (CN)**
• **Ma, Miya**
  **201206 Shanghai (CN)**

(74) Representative: **Levpat
c/o Covestro AG
Gebäude 4825
51365 Leverkusen (DE)**

(54) **METHOD FOR PREPARING POLYURETHANE RESIN AND POLYURETHANE RESIN PREPARED THEREBY**

(57)   The present invention relates to a method for preparing a polyurethane resin, the polyurethane resin prepared thereby and its use, especially its use in the field of optical lenses. The preparation method comprises reacting a system comprising an isocyanate and an isocyanate-reactive compound to obtain the polyurethane resin, wherein the initial reaction temperature $T_{ia}$, the peak reaction temperature $T_{pa}$ and the final reaction temperature $T_{fa}$ of the reaction are determined by measuring heat flows at different temperatures of the system at different heating rates and plotting heat flow-temperature curves at the different heating rates. The polyurethane resin prepared by the method provided according to the invention has the advantages of yellowing resistance as well as good mechanical properties and heat resistance, specifically good impact resistance and high glass transition temperature.

EP 3 483 194 A1

**Description**

**FIELD OF THE INVENTION**

The present invention relates to a method for preparing a polyurethane resin, the polyurethane resin prepared thereby and its use, especially its use in the field of optical lenses.

**BACKGROUND**

When compared with glass, a resin article has the advantages of light weight, high breaking strength, easy processing and dyeing, etc., thus more and more resin articles, especially transparent resin articles have replaced glass, especially in the manufacturing of optical lenses, particularly in the field of eyeglass lenses.

Examples for resin commonly used in eyeglass lens are polyallyl diglycol carbonate (PADC), polycarbonate and polyurethane. PADC resin is not suitable for preparing a high-diopter lens due to poor heat resistance, poor mechanical properties and a low refractive index. A thermoplastic molding process for polycarbonate resin causes too much internal stress within a lens, which will lead to dizziness in case of long-term wear, thus severely affecting the visual effects and comfort of a wearer. Polyurethane resin has become a preferred material in the field of eyeglass lenses due to good heat resistance, good mechanical properties, a higher refractive index and good wearing experience for a wearer.

In the preparation process of polyurethane resin, raw materials need to be reacted once or more times, and the control of the reaction temperature will greatly affect the performance of the final polyurethane resin. In the desirable reaction process, the initial temperature, peak temperature and final temperature of a reaction are controlled. A suitable initial temperature can ensure that raw materials are subjected to full and even chain extension at a low-temperature stage, thus avoiding the formation of dark stripes and streaks in polyurethane resin. A suitable peak temperature can ensure enough heat supply at a high-temperature stage to realize full conversion and crosslinking of raw materials, thus improving the mechanical properties and heat resistance of polyurethane resin. A suitable final temperature can ensure reasonable duration at a high-temperature stage, thus avoiding the degradation and yellowing of polyurethane resin caused by overheating.

Accordingly, the reaction temperature needs to be strictly controlled so as to obtain a high-performance polyurethane resin suitable in the field of eyeglass lenses. In an existing reaction method of a polyurethane resin, the temperature is generally adjusted according to the viscosity change of a raw material in the reaction process, which brings unstable quality to each batch of the polyurethane resin. Besides, in the existing method, polyurethane resins with the same refractive index are subjected to the same temperature control. However, since different raw materials have different reactivity, the same temperature control will cause insufficient conversion and crosslinking of raw materials, thus affecting the mechanical properties and heat resistance of the polyurethane resins.

Study on Reaction Kinetics and Reaction Process of Unsaturated Polyester Resin by DSC (Fiber Glass: pp 16-20, Issue 5, 2011) discloses that the initial temperature, peak temperature and final temperature in the reaction process of unsaturated polyester resin are determined by multiple heat flow-temperature curves. Study on Curing Reaction Kinetics and Curing Process of Polyisocyanate/Epoxy Resin Adhesive by DSC (Sichuan Chemical Industry: pp 1-4, Issue 2 (9), 2006) discloses that the initial temperature, peak temperature and final temperature in the reaction process of polyisocyanate are determined by multiple heat flow-temperature curves.

CN105254907A discloses a reaction method of an optical polyurethane resin, wherein a single heat flow-temperature curve is plotted for a polyurethane resin system to determine the initial temperature, peak temperature, final temperature and reaction heating procedures. This method is carried out by a theoretical approach instead of an empirical operation, and different reaction temperature control procedures can be obtained by this method according to different refractive indexes and different systems.

However, the above method is either unsuitable for a polyurethane resin system, or only one heat flow-temperature curve is plotted for the system such that the temperature determined therefrom has great error and sometimes is not representative. Moreover, when the initial temperature, peak temperature and final temperature in actual operation are determined by the above method, the temperature in the actual operation is not adjusted according to the heat release of a raw material in the reaction process.

**SUMMARY OF THE INVENTION**

An object of the present invention is to provide a method for preparing a polyurethane resin, the polyurethane resin prepared thereby and its use, especially its use in the field of optical lenses.

The method for preparing a polyurethane resin according to the present invention is characterized by comprising reacting a system comprising an isocyanate and an isocyanate-reactive compound to obtain the polyurethane resin, wherein the initial reaction temperature $T_{ia}$, the peak reaction temperature $T_{pa}$ and the final reaction temperature $T_{fa}$ of the reaction are determined by measuring heat flows at different temperatures of the system at different heating rates and plotting heat flow-temperature curves at the different heating rates.

According to one aspect of the present invention, there provids a polyurethane resin obtained by implementing the method provided according to the present invention.

According to another aspect of the present invention, there provids use of the polyurethane resin provided according to the present invention in the preparation of a molded article.

The inventor has found that after the system is heated at different heating rates to obtain several corresponding reaction heat flow-temperature curves, the minimum theoretical initial temperature, the minimum theoretical peak temperature and the minimum theoretical final temperature obtained from the curves are close to the actual initial reaction temperature, the actual peak reaction temperature and the actual final reaction temperature. Such process firstly facilitates full and even chain extension of the system to avoid the formation of dark stripes and streaks in the polyurethane resin, secondly facilitates improving the conversion and crosslinking of the system to obtain a polyurethane resin with good mechanical properties and heat resistance, and thirdly facilitates ensuring reasonable duration at a high-temperature stage to obtain a polyurethane resin which is not susceptible to yellowing.

In the present invention, based on the minimum theoretical initial, peak and final temperatures, adjustment is further made according to the heat release of the system in the reaction process to obtain the actual initial, peak and final reaction temperatures, thus further improving the mechanical properties and heat resistance of the polyurethane resin, protecting the system from an excessively high temperature in the reaction process, and avoiding the yellowing and degradation of the polyurethane resin.

## BRIEF DESCRIPTION OF THE DRAWINGS

The drawings and examples of the present invention are illustrative rather than limiting.

Fig. 1 shows heat flow-temperature curves of a mixture according to an example of the present invention at different heating rates (5 °C/min, 10 °C/min, 15 °C/min and 20 °C/min).

Fig. 2 shows temperature-heating rate $\beta$ curves of a mixture according to an example of the present invention, wherein the curves include a $T_i$-$\beta$ curve, a $T_p$-$\beta$ curve and a $T_f$-$\beta$ curve.

Fig. 3 shows heat flow-temperature curves of a mixture according to an example of the present invention at different heating rates (5 °C/min, 10 °C/min, 15 °C/min and 20 °C/min).

Fig. 4 shows temperature-heating rate $\beta$ curves of a mixture according to an example of the present invention, wherein the curves include a $T_i$-$\beta$ curve, a $T_p$-$\beta$ curve and a $T_f$-$\beta$ curve.

Fig. 5 shows a comparison graph of infrared spectra of a polyurethane resin according to an example of the present invention and a polyurethane resin according to a comparative example of the present invention.

Fig. 6 shows a comparison graph of infrared spectra of a polyurethane resin according to an example of the present invention and a polyurethane resin according to a comparative example of the present invention.

The present invention will be further described in detail with reference to the drawings and particular embodiments.

## DETAILED DESCRIPTION OF THE INVENTION

The present invention provides a method for preparing a polyurethane resin comprising reacting a system comprising an isocyanate and an isocyanate-reactive compound to obtain the polyurethane resin, wherein the initial reaction temperature $T_{ia}$, the peak reaction temperature $T_{pa}$ and the final reaction temperature $T_{fa}$ of the reaction are determined by measuring heat flows at different temperatures of the system at different heating rates and plotting heat flow-temperature curves at the different heating rates. The present invention further provides a polyurethane resin prepared by the preparation method and use thereof.

System

Isocyanate

The term isocyanate generally should be understood to mean a compound having one or more iso(thio)cyanate groups. The term isocyanate refers to isocyanate or isothiocyanate.

The term aromatic isocyanate generally should be understood as an isocyanate in which a group directly linked to an isocyanate group is an aromatic group; and the term aliphatic or cycloaliphatic isocyanate generally should be understood as an isocyanate in which a group directly linked to an isocyanate group is an aliphatic or cycloaliphatic carbon chain.

The isocyanate may be selected from those well known to those skilled in the art which can be used to prepare a polyurethane resin. The isocyanate may be added in an acceptable amount well known to those skilled in the art.

The isocyanate has a functionality of preferably not less than 2, further preferably of 2-4 and most preferably of 2-3.

The isocyanate may be selected from one or more of the group consisting of: aliphatic isocyanate, cycloaliphatic isocyanate and aromatic isocyanate.

The aliphatic isocyanate may be selected from one or more of the group consisting of: 1,6-hexamethylene diisocycanate, 2,2-dimethylpentane diisocyanate, 2,2,4-trimethylhexane diisocyanate, butene diisocyanate, 1,3-butadiene-1,4-diisocyanate, 2,4,4-trimethyl 1,6-hexamethylene diisocycanate, 1,6,11-undecane triisocyanate, 1,3,6-hexamethylene triisocyanate, 1,8-diisocyanato-4-isocyanatomethyloctane, bis(isocyanatoethyl)carbonate, bis(isocyanatoethyl)ether, lysine diisocyanatomethyl ester, lysine triisocyanate, bis(isocyanatomethyl)sulfide, bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatoethyl)disulfide, bis(isocyanatopropyl)disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-thiapentane, 1,2,3-tris(isocyanatomethylthio)propane, 1,2,3-tris(isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, isocyanatoethylthio-2,6-dithia-1,8-octanediisocyanate, thiobis(3-isothiocyanatopropane), thiobis(2-isothiocyanatoethane), dithiobis(2-isothiocyanatoethane), hexamethylene diisocyanate and isophorone diisocyanate, preferably 1,6-hexamethylene diisocycanate.

The cycloaliphatic isocyanate may be selected from one or more of the group consisting of: 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, isophorone diisocyanate, 2,5-diisocyanatotetrahydrothiophene, 2,5-diisocyanatomethyltetrahydrothiophene, 3,4-diisocyanatomethyltetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, 4,5-diisocyanatomethyl-2-methyl-1,3-dithiolane, norbornane diisocyanate (NBDI), xylylene diisocyanate (XDI), hydrogenated xylylene diisocyanate ($H_6$XDI), 1,4-cyclohexyldiisocyanate ($H_6$PPDI), 1,5-pentamethylene diisocyanate (PDI), m-tetramethylxylene diisocyanate (m-TMXDI) and cyclohexanediisothiocyanate, preferably isophorone diisocyanate and/or dicyclohexyl diisocyanate.

The aromatic isocyanate may be selected from one or more of the group consisting of: 1,2-diisocyanatobenzene, 1,3-diisocyanatobenzene, 1,4-diisocyanatobenzene, 2,4-diisocyanatotoluene, ethylphenylene diisocyanate, isopropylphenylene diisocyanate, toluene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylene bis(phenylisocyanate), 4,4'-methylene bis(2-methylphenylisocyanate), bibenzyl-4,4'-diisocyanate, bis(isocyanatophenyl)ethylene, bis(isocyanatomethyl)benzene, bis(isocyanatoethyl)benzene, bis(isocyanatopropyl)benzene, $\alpha,\alpha,\alpha',\alpha'$-tetramethylxylylene diisocyanate, bis(isocyanatobutyl)benzene, bis(isocyanatomethyl)naphthalene, bis(isocyanatomethylphenyl)ether, bis(isocyanatoethyl)phthalate, 2,6-di(isocyanatomethyl)furane, 2-isocyanatophenyl-4-isocyanatophenyl sulfide, bis(4-isocyanatophenyl)sulfide, bis(4-isocyanatomethylphenyl)sulfide, bis(4-isocyanatophenyl)disulfide, bis(2-methyl-5-isocyanatophenyl)disulfide, bis(3-methyl-5-isocyanatophenyl)disulfide, bis(3-methyl-6-isocyanatophenyl)disulfide, bis(4-methyl-5-isocyanatophenyl)disulfide, bis(4-methoxy-3-isocyanatophenyl)disulfide, 1,2-diisothiocyanatobenzene, 1,3-diisothiocyanatobenzene, 1,4-diisothiocyanatobenzene, 2,4-diisothiocyanatotoluene, 2,5-diisothiocyanato-m-xylene, 4,4'-methylene bis(phenylisothiocyanate), 4,4'-methylene bis(2-methylphenylisothiocyanate), 4,4'-methylene bis(3-methylphenylisothiocyanate), 4,4'-diisothiocyanatobenzophenone, 4,4'-diisothiocyanato-3,3'-dimethylbenzophenone, bis(4-isothiocyanatophenyl)ether, 1-isothiocyanato-4-[(2-isothiocyanato)sulfonyl]benzene, thiobis(4-isothiocyanatobenzene), sulfonyl(4-isothiocyanatobenzene), hexahydrotoluylene diisocyanate (H6TDI) and dithiobis(4-isothiocyanatobenzene), preferably 1,2-diisocyanatobenzene, 1,3-diisocyanatobenzene, 1,4-diisocyanatobenzene or 2,4-diisocyanatotoluene.

The isocyanate may also have isocyanate and isothiocyanate groups, e.g. 1-isocyanato-6-isothiocyanatohexane, 1-isocyanato-4-isothiocyanatohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanatophenyl-4-isothiocyanatophenyl sulfide and 2-isocyanatoethyl-2-isothiocyanatoethyl disulfide.

The isocyanate may also be a halogen substitute such as a chlorine substitute, a bromine substitute, an alkyl substitute, an alkoxy substitute, a nitro substitute or a silane substitute (such as isocyanatopropyl triethoxysilane or isocyanatopropyl(trimethoxy)silane), of the above described isocyanate.

The isocyanate is not limited to the compounds mentioned above. In addition, the compounds mentioned above may be used either alone or in combination of two or more thereof.

Isocyanate-reactive compound

The isocyanate-reactive compound may be added in an acceptable amount well known to those skilled in the art.

The content of the isocyanate-reactive compound is preferably 5-95 wt%, based on that the weight of the polyurethane resin is 100 wt%.

The isocyanate-reactive compound may have a functionality of the group reactive to an isocyanate group of 2.0-4.0, preferably of 2.5-4.0 and particularly preferably of 3.0-4.0.

The equivalent ratio of an isocyanate group of the isocyanate and a group reactive to an isocyanate group of the isocyanate-reactive compound is preferably 0.5:1-2.0:1, further preferably 0.7:1-1.3:1, more preferably 0.8:1-1.2:1 and most preferably 0.95:1.

The isocyanate-reactive compound may be selected from one or more of the group consisting of: a hydroxy-containing compound, an amine group-containing compound and a mercapto-containing compound, most preferably a mercapto-containing compound.

Hydroxy-containing compound

The hydroxy-containing compound may be one or more of polyester polyol, polyacrylate polyol, polyurethane polyol, polycarbonate polyol, polyether polyol, polyester polyacrylate polyol, polyurethane polyacrylate polyol, polyurethane polyester polyol, polyurethane polyether polyol, polycarbonate polyether polyol, polyurethane polycarbonate polyol and polyester polycarbonate polyol.

The hydroxy-containing compound is preferably selected from one or more of polycarbonate polyol, polyester polyol and polyether polyol, most preferably polycarbonate polyol and/or polyester polyol.

The polycarbonate polyol may have a number average molecular weight of 400-8000 g/mol, preferably 600-3000 g/mol.

The polycarbonate polyol may be selected from hydroxy-containing polycarbonate, preferably polycarbonate diol.

The polycarbonate diol may be obtained by reaction of carbonic acid derivatives such as diphenyl carbonate or dimethyl carbonate with polyols, preferably diols.

The diol may be selected from ethylene glycol, 1,2-and 1,3-propanediol, 1,3-and 1,4-butanediol, 1,6-hexanediol, 1,8-octanediol, neopentyl glycol, 1,4-bishydroxymethylcyclohexane, 2-methyl-1,3-propanediol, 2,2,4-trimethyl-1,3-pentanediol, dipropylene glycol, polypropylene glycols, dibutylene glycol, polybutylene glycols, bisphenol A or lactone-modified diols of the types mentioned above.

The diol preferably comprises 40-100 wt% of hexanediol. The hexanediol is preferably selected from 1,6-hexanediol and/or hexanediol derivatives. The 1,6-hexanediol derivatives further comprise ester or ether groups in addition to terminal OH groups, and can be obtained by reaction of hexanediol with an equal or excess amount of caprolactone or by self-etherification of hexanediol to form di-or trihexylene glycol.

The polyester polyol may be a linear polyester diol or a slightly branched polyester polyol, and can be prepared from the following components: aliphatic, cycloaliphatic or aromatic di-or poly-carboxylic acids, such as succinic acid, methylsuccinic acid, glutaric acid, adipic acid, pimelic acid, suberic acid, azelaic acid, sebacic acid, nonanedicarboxylic acid, decanedicarboxylic acid, terephthalic acid, isophthalic acid, o-phthalic acid, tetrahydrophthalic acid, hexahydrophthalic acid, cyclohexanedicarboxylic acid, maleic acid, fumaric acid, malonic acid or trimellitic acid; acid anhydrides, such as phthalic anhydride, trimellitic anhydride or succinic anhydride or combinations thereof; and low molecular weight polyols, and optionally, higher-functional polyols, such as trimethylolpropane, glycerol or pentaerythritol, cycloaliphatic and/or aromatic di-and poly-hydroxyl compounds are used.

The polyester polyol may also be slected from homopolymers or mixed polymers of lactones, which are preferably obtained by adding lactones or lactone components, such as butyrolactone, ε-caprolactone and/or methyl-ε-caprolactone, to suitable di-and/or higher-functional starter molecules. The ε-caprolactone is preferably a polymer of ε-caprolactones.

The hydroxy-containing compound may also comprise a sulfur group.

The hydroxy-containing compound comprising a sulfur group preferably comprises at least one sulfur atom in the form of a thio group, a thioether group, a thioester urethane group, an ester thiourethane group and/or a polythioesterthiourethane group as well as at least one hydroxy group.

The hydroxy-containing compound comprising a sulfur group is further preferably selected from the group consisting of: mercapto alcohols such as 2-mercaptoethanol, 3-mercaptopropanol, 1,3-dimercapto-2-propanol, 2,3-dimercaptopropanol or dithioerythritol; thioether structure-comprising alcohols such as di(2-hydroxyethyl)sulfide, 1,2-bis(2-hydroxyethylmercapto)ethane, bis(2-hydroxyethyl)disulfide or 1,4-dithiane-2,5-diol; and sulfur-containing diols with a polyester urethane-, polythioester urethane-, polyesterthiourethane-or polythioester thiourethane structure, as mentioned in EP-A 1 640 394. Such sulfur-containing hydroxy compounds may be used alone or in the form of any combination thereof.

The sulfur-containing hydroxy compound is more preferably selected from polyetherthiol and/or polyesterthiol.

The sulfur-containing hydroxy compound is most preferably selected from one or more of the group consisting of: 4-mercaptomethyl-1,8-dimercapto-3,6-dithiaoctane, 1,1,3,3-tetrakis(mercaptomethylthio)propane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, trimethylolpropane-tris(2-mercaptoacetate), trimethylolpropane-tris(3-mercaptopropionate), pentaerythritol-tetrakis(2-mercaptoacetate) and pentaerythritol-tetrakis (3-mercaptopropionate).

## Amine group-containing compound

The amine group-containing compound may be selected from those well known to those skilled in the art.

The amine group-containing compound is preferably selected from the group consisting of:mono-, di-, trifunctional amines and/or mono-, di-, trifunctional hydroxyamines; aliphatic and/or cycloaliphatic primary and/or secondary monoamines such as ethylamine, diethylamine, isomeric propylamine and butylamine, and cyclohexylamine; aminoalcohols such as ethanolamine, N-methylethanolamine, diethanolamine, diisopropanolamine, 1,3-diamino-2-propanol, N-(2-hydroxyethyl)-ethylenediamine, N,N-bis(2-hydroxyethyl)-ethylenediamine and 2-propanolamine; diamines and triamines such as 1,2-ethanediamine, 1,6-hexamethylenediamine, 1-amino-3,3,5- trimethyl-5-aminomethyl-cyclohexane (isophoronediamine), piperazine, 1,4-diaminocyclohexane, bis-(4-aminocyclohexyl)-methane and diethylenetriamine; and adipic acid dihydrazide, hydrazine or hydrazine hydrate. Such amine group-containing compounds may be used alone or in the form of any combination thereof.

The amine group-containing compound is most preferably selected from one or more of the group consisting of: 1,2-ethanediamine, 1-amino-3,3,5-trimethyl-5-aminomethyl-cyclohexane (isophoronediamine), diethylenetriamine, diethanolamine, ethanolamine, N-(2-hydroxyethyl)-ethylenediamine and N,N-bis(2-hydroxyethyl)-ethylenediamine.

## Mercapto-containing compound

The mercapto-containing compound preferably comprises not less than two mercapto groups.

The mercapto-containing compound is further preferably selected from the group consisting of: alkanethiols such as methanedithiol, 1,2-ethanedithiol, 1,1-propanedithiol, 1,2-propanedithiol, 1,3-propanedithiol, 2,2-propanedithiol, 1,4-butanedithiol, 2,3-butanedithiol, 1,5-pentanedithiol, 1,6-hexanedithiol, 1,2,3-propanetrithiol, 1,1-cyclohexanedithiol, 1,2-cyclohexanedithiol, 2,2-dimethylpropane-1,3-dithiol, 3,4-dimethoxybutane-1,2-dithiol or 2-methylcyclohexane-2,3-dithiol; thioether group-containing polythiols such as 2,4-dimercaptomethyl-1,5-dimercapto-3-thiapentane, 4-mercaptomethyl-1,8-dimercapto-3,6-dithiaoctane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 5,6-bis-(mercaptoethylthio)-1,10-dimercapto-3,8-dithiadecane, 4,5-bis-(mercaptoethylthio)-1,10-dimercapto-3,8-dithiadecane, tetrakis(mercaptomethyl)methane, 1,1,3,3-tetrakis(mercaptomethylthio)propane, 1,1,5,5-tetrakis(mercaptomethylthio)-3-thiapentane, 1,1,6,6-tetrakis(mercaptomethylthio)-3,4-dithiahexane, 2-mercaptoethylthio-1,3-dimercaptopropane, 2,3-bis(thio(2-mercaptoethyl))-1-n-propanethiol, 2,2-bis(mercaptomethyl)-1,3-dimercaptopropane, bis-(mercaptomethyl)sulfide, bis(mercaptomethyl)disulfide, bis(mercaptoethyl)sulfide, bis(mercapto-ethyl)disulfide, bis(mercaptopropyl)sulfide, bis(mercaptopropyl)disulfide, bis(mercaptomethylthio)methane, tris(mercaptomethylthio)methane, bis(mercaptoethylthio)methane, tris(mercapto-ethylthio)methane, bis(mercaptopropylthio)methane, 1,2-bis(mercaptomethylthio)ethane, 1,2-bis-(mercaptoethylthio)ethane, 2-mercaptoethylthio)ethane, 1,3-bis(mercaptomethylthio)propane, 1,3-bis(mercaptopropylthio)propane, 1,2,3-tris(mercaptomethylthio)propane, 1,2,3-tris(mercapto-ethylthio)propane, 1,2,3-tris(mercaptopropylthio)propane, tetrakis(mercaptomethylthio)methane, tetrakis(mercaptoethylthiomethyl)methane, tetrakis(mercaptopropylthiomethyl)methane, 2,5-dimercapto-1,4-dithiane, 2,5-bis(mercaptomethyl)-1,4-dithiane and its oligomers obtained according to JP-A 07118263, 1,5-bis(mercaptopropyl)-1,4-dithiane, 1,5-bis(2-mercaptoethylthiomethyl)-1,4-dithiane, 2-mercaptomethyl-6-mercapto-1,4-dithiacycloheptane, 2,4,6-trimercapto-1,3,5-trithiane, 2,4,6-trimercaptomethyl-1,3,5-trithiane or 2-(3-bis(mercaptomethyl)-2-thiapropyl)-1,3-dithiolane; polyesterthiols such as ethylene glycol-bis(2-mercaptoacetate), ethylene glycol-bis(3-mercaptopropionate), diethylene glycol(2-mercaptoacetate), diethylene glycol(3-mercaptopropionate), 2,3-dimercapto-1-propanol(3-mercaptopropionate), 3-mercap-

to-1,2-propandiol-bis(2-mercaptoacetate), 3-mercapto-1,2-propandiol-bis(3-mercaptopropionate), trimethylolpropane-tris(3-mercaptopropionate), trimethylolethane-tris(2-mercaptoacetate), trimethylolethane-tris(3-mercaptopropionate), pentaerythritol-tetrakis(2-mercaptoacetate), pentaerythritol-tetrakis(3-mercaptopropionate), glycerin-tris(2-mercaptoacetate), glycerin-tris(3-mercaptopropionate), 1,4-cyclohexanediol-bis(2-mercaptoacetate), 1,4-cyclohexanediol-bis(3-mercaptopropionate), hydroxy-methylsulfide-bis(2-mercaptoacetate), hydroxy-methylsulfide-bis(3-mercaptopropionate), hydroxyethylsulfide(2-mercaptoacetate), hydroxyethylsulfide(3-mercaptopropionate), hydroxymethyldisulfide(2-mercaptoacetate), hydroxymethyldisulfide(3-mercaptopropionate), ((2-mercaptoethylester)thioglycolate or bis(2-mercaptoethylester)thiodipropionate; and aromatic thiocompounds such as 1,2-dimercaptobenzene, 1,3-dimercaptobenzene, 1,4-dimercaptobenzene, 1,2-bis(mercaptomethyl)benzene, 1,4-bis(mercaptomethyl)benzene, 1,2-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris-(mercaptomethyl)benzene, 1,2,4-tris(mercaptomethyl)benzene, 1,3,5-tris(mercaptomethyl)benzene, 1,2,3-tris(mercaptoethyl)benzene, 1,3,5-tris(mercaptoethyl)benzene, 1,2,4-tris(mercaptoethyl)benzene, 2,5-toluenedithiol, 3,4-toluenedithiol, 1,4-naphthalenedithiol, 1,5-naphthalenedithiol, 2,6-naphthalenedithiol, 2,7-naphthalenedithiol, 1,2,3,4-tetramercaptobenzene, 1,2,3,5-tetramercapto-benzene, 1,2,4,5-tetramercaptobenzene, 1,2,3,4-tetrakis(mercaptomethyl)benzene, 1,2,3,5-tetrakis-(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 2,2'-dimercaptobiphenyl or 4,4'-dimercaptobiphenyl. Such mercapto-containing compounds may be used alone or in the form of any combination thereof.

The mercapto-containing compound is most preferably 2,3-bis(thio(2-mercaptoethyl))-1-n-propanethiol.

Hydroxyl-functional compound having a molecular weight of 32-400 g/mol

The system may further comprise a hydroxyl-functional compound having a molecular weight of 32-400 g/mol.

The hydroxyl-functional compound having a molecular weight of 32-400 g/mol may be selected from one or more of polyols having up to 20 carbon atoms, such as ethylene glycol, diethylenc glycol, triethylene glycol, 1,2-propanediol, 1,3-propanediol, 1,4-butanediol, 1,3-butylene glycol, cyclohexanediol, 1,4-cyclohexanedimethanol, 1,6-hexanediol, neopentyl glycol, hydroquinone dihydroxyethyl ether, bisphenol A (2,2-bis(4-hydroxyphenyl)propane), hydrogenated bisphenol A (2,2-bis(4-hydroxycyclohexyl)-propane), trimethylolpropane, glycerol and pentaerythritol.

The hydroxyl-functional compound having a molecular weight of 32-400 g/mol may also be selected from one or more of esterdiols, such as α-hydroxybutyl-ε-hydroxyhexanoate, ω-hydroxyhexyl-γ-hydroxybutyrate, β-hydroxyethyl adipicate orβ-hydroxyethyl terephthalicate.

The hydroxyl-functional compound having a molecular weight of 32-400 g/mol may also be selected from one or more of the group consisting of: ethanol, n-butanol, ethylene glycol monobutyl ether, diethylene glycol monomethyl ether, ethylene glycol monobutyl ether, diethylene glycol monobutyl ether, propylene glycol monomethyl ether, dipropylene glycol monomethyl ether, tripropylene glycol monomethyl ether, dipropylene glycol monopropyl ether, propylene glycol monobutyl ether, dipropylene glycol monobutyl ether, tripropylene glycol monobutyl ether, 2-ethylhexanol, 1-octanol, 1-dodecanol, 1-hexadecanol, 1,6-hexanediol, 1,4-butanediol, neopentyl glycol and trimethylolpropane, preferably 1,6-hexanediol, 1,4-butanediol, neopentyl glycol and trimethylolpropane.

Auxiliary agent and/or additive

The system may further comprise an auxiliary agent and/or an additive. The auxiliary agent and/or the additive may be selected from one or more of the group consisting of: catalyst, stabilizer, antioxidant, release agent and blueing agent.

Each of the above optionally added auxiliary agents and/or additives may be mixed with the isocyanate or the isocyanate-reactive compound. The auxiliary agent and/or the additive may be mixed with the isocyanate or the isocyanate-reactive compound in any order. Preferably, the release agent and the catalyst are mixed with the isocyanate, and the stabilizer, the antioxidant and the blueing agent are mixed with the isocyanate-reactive compound.

The catalyst may be a catalyst known in polyurethane chemistry. The catalyst is preferably selected from the group consisting of: tertiary amines such as triethylamine, tributylamine, dimethylbenzylamine, diethylbenzylamine, pyridine, methylpyridine, dicyclohexylmethylamine, dimethylcyclohexylamine, N,N,N',N'-tetramethyldiaminodiethyl ether, bis-(dimethylaminopropyl)urea, N-methylmorpholine, N-ethylmorpholine, N-cocomorpholine, N-cyclohexylmorpholine, N,N,N',N'-tetramethylethylenediamine, N,N,N',N'-tetramethyl-1,3-butanediamine, N,N,N',N'-tetramethyl-1,6-hexanediamine, pentamethyldiethylenetriamine, N-methylpiperidine, N-dimethylaminoethylpiperidine, N,N'-dimethylpiperazine, N-methyl-N'-dimethylaminopiperazine, 1,8-diazabicyclo(5.4.0)undec-7-ene (DBU), 1,2-dimethylimidazole, 2-methylimidazole, N,N-dimethylimidazole-P-phenylethylamine, 1,4-diazabicyclo-(2,2,2)-octane and bis-(N,N-dimethylaminoethyl)adipate; alkanolamine compounds such as triethanolamine, triisopropanolamine, N-methyl-and N-ethyldiethanolamine, dimethylamino ethanol, 2-(N,N-dimethylaminoethoxy)ethanol, N,N',N"-tris-(dialkylaminoalkyl)hexahydrotriazines, N,N',N''-tris-(dimethylaminopropyl)-s-hexahydrotriazine and bis(dimethylaminoethyl) ether; metal salts such as inorganic and/or organic compounds of iron, lead, bismuth, zinc and/or tin in usual oxidation states of the metals, for example, iron (II) chloride, iron (III) chloride, bismuth (III) 2-ethylhexanoate, bismuth(III) octoate, bismuth (III) neodecanoate, zinc chloride, zinc 2-ethylcaproate, tin (II) octoate, tin (II) ethylcaproate, tin (II) palmitate, dibutyltin (IV) dilaurate (DBTL), dibutyltin (IV) dichloride and lead octoate; amidines such as 2,3-dimethyl-3,4,5,6-tetrahydropyrimidine; tetraalkylammonium hydroxides such as tetramethylammonium hydroxide; alkali metal hydroxides such as sodium hydroxide; alkali metal alcoholates such as sodium methylate and potassium isopropylate; or alkali metal salts of long-chain fatty acids having 10 to 20 carbon atoms and optionally side-chain OH groups.

The catalyst is further preferably selected from tin, zinc or bismuth compounds of tertiary amines.

The catalysts described above can be used alone or in the form of any combination thereof to prepare the polyurethane resin according to the present invention.

The amount of the catalyst is 0.01-5.0 wt%, preferably 0.1-2.0 wt%, based on that the amount of the isocyanate and the isocyanate-reactive compound is 100 wt%.

The stabilizer may be optionally an UV stabilizer of a known type, which is preferably selected from the group consisting of: piperidine derivatives such as 4-benzoyloxy-2,2,6,6-tetramethylpiperidine, 4-benzoyloxy-1,2,2,6,6-pentamethylpiperidine, bis-(2,2,6,6-tetramethyl-4-piperidyl)-sebacate, bis(1,2,2,6,6-pentamethyl-1,4-piperidyl)-sebacate, bis-(2,2,6,6-tetramethyl-4-piperidyl)-suberate and bis-(2,2,6,6-tetramethyl-4-piperidyl)-dodecanedioate; benzophenone derivatives such as 2,4-dihydroxy-, 2-hydroxy-4-methoxy-, 2-hydroxy-4-octoxy-, 2-hydroxy-4-dodecyloxy-or 2,2'-dihydroxy-4-dodecyloxy-benzophenone; benzotriazole derivatives such as 2-(2H-benzotriazol-2-yl)-4,6-di-tert-pentylphenol, 2-(2H-benzotriazol-2-yl)-6-dodecyl-4-methylphenol, 2-(2H-benzotriazol-2-yl)-4,6-bis(1-methyl-1-phenylethyl)phenol, 2-(5-chloro-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-benzotriazol-2-yl)-6-(1-methyl-1-phenylethyl)-4-(1,1,3,3-tetramethylbutyl)phenol, isooctyl-3-(3-(2H-benzotriazol-2-yl)-5-(1,1-dimethylethyl)-4-hydroxyphenyl propionate), 2-(2H-benzotriazol-2-yl)-4,6-bis(1,1-dimethylethyl)phenol, 2-(2H-benzotriazol-2-yl)-4,6-bis(1-methyl-1-phenylethyl)phenol and 2-(5-chloro-2H-benzotriazol-2-yl)-4,6-bis(1,1-dimethylethyl)phenol; oxalanilides such as 2-ethyl-2'-ethoxy or 4-methyl-4'-methoxyoxalanilide; salicylates such as phenyl salicylate, 4-tert-butylphenyl salicylate and 4-tert-octylphenyl salicylate; cinnamate derivatives such as methyl $\alpha$-cyano-P-methyl-4-methoxy-cinnamate, butyl $\alpha$-cyano-$\beta$-methyl-4-methoxy-cinnamate, ethyl $\alpha$-cyano-P-phenyl-cinnamate and isooctyl $\alpha$-cyano-$\beta$-phenyl-cinnamate; or malonate derivatives such as dimethyl 4-methoxy-benzylidenemalonate, diethyl 4-methoxybenzylidenemalonate, or dimethyl 4-butoxy-benzylidenemalonate. Such light stabilizers may be used alone or in the form of any combination thereof.

The UV stabilizer further preferably comprises an UV-stabilizer with a benzotriazol structure, and particularly preferably selected from one or more of the group consisting of: 2-(5-chloro-2H-benzotriazol-2-yl)-6-(1,1-dimethylethyl)-4-methylphenol, 2-(2H-benzotriazol-2-yl)-4-(1,1,3,3-tetramethylbutyl)phenol and 2-(5-chloro-2H-benzotriazol-2-yl)-4,6-bis(1,1-dimethylethyl)phenol.

The UV stabilizer with a benzotriazol structure can completely absorb radiation at a wavelength <400 nm so that eyes can be protected against UV radiation when the composition of the present invention is used as an eyeglass lens.

The amount of the UV stabilizer is 0.001-3.0 wt%, preferably 0.01-2.0 wt% based on that the amount of the isocyanate and the isocyanate-reactive compound is 100 wt%.

The antioxidant may be selected from sterically hindered phenols, preferably 2,6-di-tert-butyl-4-methylphenol, pentaerythritol tetrakis(3-(3,5-di-tert-butyl-4-hydroxyphenyl)propionate), octadecyl 3-(3,5-di-tert-butyl-4-hydroxyphenyl)- propionate, triethylene glycol bis(3-tert-butyl-4-hydroxy-5-methylphenyl)propionate, 2,2'-thio-bis(4-methyl-6-tert-butyl-phenol) or 2,2'-thiodiethyl bis[3-(3,5-di-tert-butyl-4-hydroxyphenyl)propionate]. Such antioxidants may be used alone or in the form of any combination thereof.

The amount of the antioxidant is 0.01-3.0 wt%, preferably 0.02-2 wt% based on that the amount of the isocyanate and the isocyanate-reactive compound is 100 wt%.

The release agent may be selected from the group consisting of: non-ionic surfactants comprising perfluoroalkyl- or polysiloxane units; quaternary alkyl ammonium salts such as trimethylethyl ammonium chloride, trimethylstearyl ammonium chloride, dimethylethylcetyl ammonium chloride, triethyldodecyl ammonium chloride, trioctylmethyl ammonium chloride and diethylcyclohexyldodecyl ammonium chloride; and acidic mono and dialkylphosphate with 2 to 18 carbon atoms in the alkyl chain such as ethylphosphate, diethylphosphate, isopropyl phosphate, diisopropylphosphate, butyl phosphate, dibutyl phosphate, octyl phosphate, dioctyl phosphate, isodecyl phosphate, diisodecyl phosphate, dodecyl phosphate, didoceyl phosphate, tridecanolphosphate, bis(tridecanol)phosphate, stearyl phosphate or distearylphosphate. Such release agents may be used alone or in the form of any combination thereof.

The release agent is preferably selected from acidic mono and/or dialkylphosphates, most preferably acidic mono and/or dialkylphosphates with 8 to 12 carbon atoms in the alkyl chain.

The amount of the release agent is 0.01-3.0 wt%, preferably 0.02-2 wt% based on that the total amount of the isocyanate and the isocyanate-reactive compound is 100 wt%.

The blueing agent is selected from the group consisting of: anthraquinone blueing agents such as Exalite Blue 78-13 from Exciton, Inc., Ohio, USA; and Macrolex Violet B, Macrolex Blue RR or Macrolex Violet 3R from Lanxess AG, Germany. Such blueing agents may be used alone or in the form of any combination thereof.

Polyurethane resin

The term polyurethane resin refers to polyurethane resin or polythiourethane resin.

Reaction

The reaction is preferably carried out by simply pouring the system into a mold, or using a suitable apparatus such as a conventional low-pressure or high-pressure machine in a polyurethane technology, or by implementing a reaction injection molding method.

The reaction is carried out at a temperature of not higher than 160°C, further preferably 10-140 °C and more preferably 25-130 °C.

The reaction may be carried out at normal pressure or elevated pressure, wherein the pressure is preferably not higher than 300 bar, further preferably not higher than 100 bar and most preferably not higher than 40 bar.

The reaction time is preferably 17-34 h.

The different heating rates may comprise at least three different heating rates in a gradient relationship.

The heating rates may be 5 °C/min, 10 °C/min, 15 °C/min and 20 °C/min.

The initial reaction temperature, the peak reaction temperature and the final reaction temperature of the reaction are associated with the heating rate; a reaction exothermic peak moves towards higher temperature with the increase of the heating rate; and the initial reaction temperature, the peak reaction temperature and the final reaction temperature also increase.

The initial reaction temperature $T_{ia}$, the peak reaction temperature $T_{pa}$ and the final reaction temperature $T_{fa}$ are determined by the steps of:

heating the system to 200-250°C at the heating rates, measuring heat flows at different temperatures of the system, and plotting reaction heat flow-temperature curves at different heating rates with heat flow as a vertical axis and temperature as a horizontal axis;

reading a set of theoretical initial temperatures $T_i$, a set of theoretical peak temperatures $T_p$ and a set of theoretical final temperatures $T_f$ at different heating rates from the reaction heat flow-temperature curves;

plotting a $T_i$ curve with the theoretical initial temperature $T_i$ as a vertical axis and the heating rate as a horizontal axis; plotting a $T_p$ curve with the theoretical peak temperature $T_p$ as a vertical axis and the heating rate as a horizontal axis; and plotting a $T_f$ curve with the theoretical final temperature $T_f$ as a vertical axis and the heating rate as a horizontal axis; and

reading the temperature at the heating rate of 0 °C/min from the $T_i$ curve and recording the temperature as the minimum theoretical initial temperature $T_{i0}$; reading the temperature at the heating rate of 0 °C/min from the $T_p$ curve and recording the temperature as the minimum theoretical peak temperature $T_{p0}$; and reading the temperature at a heating rate of 0 °C/min from the $T_f$ curve and recording the temperature as the minimum theoretical final temperature $T_{f0}$; wherein

$T_{ia}=T_{i0}$; $T_{pa}=T_{p0}$; and $T_{fa}=T_{f0}$.

The measurement is performed with a differential scanning calorimeter.

Preferably, the system is heated to 250°C at the heating rates.

The peak reaction temperature $T_{pa}$ and the final reaction temperature $T_{fa}$ can be further adjusted as follows: $T_{p0}-15<T_{pa}<T_{p0}-5$; $T_{fa}=T_{f0}$ when $T_{f0}<130°C$; and $T_{fa}=130°C$ when $T_{f0}\geq130°C$.

The theoretical initial temperature $T_i$ is the temperature corresponding to an intersection point of the baseline at the left side of the exothermic peak of the heat flow-temperature curve and the tangent line drawn at the maximum slope at the beginning of curve transition; the theoretical peak temperature $T_p$ is the temperature corresponding to the highest point of the heat flow-temperature curve; and the theoretical final temperature $T_f$ is the temperature corresponding to the intersection point of the baseline at a right side of the exothermic peak of the heat flow-temperature curve and the tangent line drawn at the maximum slope at the end of curve transition.

The method comprises the steps of:

a. heating the system from the initial system temperature to the initial reaction temperature Tia over 4-8 h and maintaining the temperature for 4-8 h;

b. heating the solution obtained in the step a from $T_{ia}$ to the adjusted peak reaction temperature $T_{pa}$ over 4-8 h and maintaining the temperature 2-4 h;

c. heating the solution obtained in the step b from the adjusted peak reaction temperature $T_{pa}$ to the adjusted final reaction temperature $T_{fa}$ over 1-2 h and maintaining the temperature 1-2 h; and
d. cooling the solution obtained in the step c to 60-80°C over 1-2 h to obtain the polyurethane resin.

The initial temperature of the system is preferably 25°C.

The polyurethane resin can be further subjected to annealing treatment. The annealing treatment can allow that the polyurethane resin is maintained at the adjusted final reaction temperature $T_{fa}$ for 2-4 h and then cooled to 60-80°C over 1-2 h.

The polyurethane resin has an impact strength of preferably not less than 110 g and a glass transition temperature of preferably not less than 105°C.

Molded article

The molded article of the present invention is especially a molded part as defined in DIN7708, i.e. a designated plastic product prepared from a molding material or a semifinished product. The molding material refers to a liquid, pasty or solid substance in a processable state, which can form a semifinished product or a molded part by a non-cutting method.

The molded article is preferably an integral three-dimensional molded article, the minimum size (thickness) of which is preferably at least 1 mm, further preferably at least 2 mm and most preferably at least 3 mm. The molded article is further preferably an integral spherical molded article, the diameter of which is preferably at least 1 mm, further preferably at least 2 mm and more preferably at least 3 mm.

The molded article is further preferably an optical lens which may be an optically active element having two refractive surfaces. In particular, the optical lens should be understood as a transparent molded article, which allows an object to be imaged in a reduced or magnified size by light refraction. The optical lens is particularly used in a microscope, a telescope, an object lens, a headlight, a projector, a magnifier and an eyeglass lens.

The molded article is most preferably an eyeglass lens.

The eyeglass lens can be prepared by the following procedures:

the system is subjected to degassing treatment to reduce air bubbles in the polyurethane resin and improve the transparency of the polyurethane resin;
the degassed system is cooled to a temperature of less than 50°C, preferably less than 30°C;
the cooled system is poured into a mold through a secondary filter having an average pore diameter of 0.1-10 $\mu$m;
the system is reacted, cooled to room temperature and demolded to obtain a blank;
the blank is subjected to post-annealing treatment at a temperature of preferably more than 100°C for several hours (e.g. not exceeding 10 h) to obtain the post-annealed blank; and the blank is further processed into a finished eyeglass lens by a method such as grinding, polishing, coloring or film coating (e.g. the application of an antireflective coating, a hard coating and/or a hydrophobic coating) commonly used in the eyeglass lens industry.

The degassing treatment can be carried out at a temperature up to 80°C under reduced pressure (e.g. 5-50 mbar), for example, for 10 min to 6 h.

**Examples**

Unless otherwise defined, all technical and scientific terms used herein have the same meaning as commonly understood by those skilled in the art of the invention. When the definition of a term in the present description conflicts with the meaning as commonly understood by those skilled in the art of the invention, the definition described herein shall apply.

Unless otherwise specified, all numerical values expressing amount of ingredients, reaction conditions and the like which are used in the description and claims are to be understood as being modified by the term "about". Accordingly, unless indicated to the contrary, the numerical values and parameters described herein are approximate values which are capable of being changed according to the desired performed obtained as required.

Unless otherwise specified, the functionality in the present invention refers to average functionality.

The term "and/or" used herein refers to one or all of the elements mentioned.

The terms "including" and "comprising" used herein respectively cover the circumstance that only the elements mentioned present and the circumstance that other unmentioned elements in addition to the elements mentioned present.

All percentages in the present invention refer to weight percentage, unless otherwise specified.

The analysis and measurement in the present invention are carried out at 23°C, unless otherwise specified.

The temperature unit in the persent invention is °C.

Differential Scanning Calorimeter (DSC) Model: Model Q20, TA Instruments, Inc.; protective gas: nitrogen; gas flow rate: 50 ml/min.

The viscosity is measured at 25°C using a DV-II+Pro. rotational viscometer from Brookfield Corporation according to DIN 53019.

The content of isocyanate group (NCO) is measured by volume according to DIN-EN ISO 11909.

The NCO functionality is calculated by gel permeation chromatography (GPC).

## Raw materials and reagents

Dicyclohexyl methane diisocyanate ($H_{12}$MDI): trade name: Desmodur®W; the content of isocyanate group (NCO): 31.8%±0.5; viscosity: 30 mPa.s; NCO functionality: 2; used as an isocyanate in the system; available from Covestro Polymers (China) Company Limited.

Hexamethylene diisocyanate (HDI) trimer: trade name: Desmodur®N3600; NCO content: 23±0.5%; the content of HDI monomer: ≤0.25%; viscosity: 1100 mPa·s; NCO functionality: 3-4; used as an isocyanate in the system; available from Covestro Polymers (China) Company Limited.

Hexamethylene diisocyanate (HDI): trade name: Desmodur®H; NCO content: 49.7%; viscosity: 3 mPa·s; NCO functionality: 2; used as an isocyanate in the system; available from Covestro Polymers (China) Company Limited.

Isophorone diisocyanate (IPDI): trade name: Desmodur® I; NCO content: 37.5±0.5%; viscosity: 10 mPa·s; NCO functionality: 2; used as an isocyanate in the system; available from Covestro Polymers (China) Company Limited.

Dibutyltin dilaurate (DBTL): a catalyst; used as an auxiliary agent and/or an additive in the system; available from Sigma-Aldrich Corporation.

Zelec® UN: an internal release agent; used as an auxiliary agent and/or an additive in the system; available from Stepan Company.

## Preparation method of 2,3-bis(thio(2-mercaptoethyl))-1-n-propanethiol (used as an isocyanate-reactive compound in the system)

53.2 g (0.681 mol) 2-mercaptoethanol and 27.2g (0.680 mol) sodium hydroxide were homogeneously dissolved in 200 ml ethanol. 30.0 g (0.324 mol) epichlorohydrin was added dropwise to the resulting ethanol solution at 15°C. The resulting mixture was heated to 50°C and stirred for 1 h. The mixture was cooled at room temperature, and then 40.5 g (0.399 mol) 36% hydrochloric acid was added to form a precipitate. The precipitated salt was separated by suction filtration. A filtrate was concentrated under reduced pressure to yield 70.6 g 1,3-bis(2-hydroxyethylthio-2-propanol) as a colorless viscous liquid. The colorless viscous liquid was dissolved in 203 g (2.00 mol) 36% hydrochloric acid, added with 92.6 g (1.22 mol) of thiourea, heated at 110°C and sirred for 6 h to obtain a solution. The solution was cooled to room temperature, added with 195 g (2.44 mol) of a 50% aqueous sodium hydroxide solution, maintained at a temperature of 20-40°C, then heated, and stirred at 110°C for 30 min. The resulting solution was cooled to room temperature, and then added with 100 ml toluene for separation and extraction to obtain a toluene phase. The toluene phase was washed twice with 100 ml 15% hydrochloric acid and 100 ml water. The resulting toluene solution was dried over anhydrous sodium sulfate to yield 75.6 g (0.290 mol) 2,3-bis(thio(2-mercaptoethyl))-1-n-propanethiol which had an equivalent weight of 260.5 g/ mol, a viscosity of (23°C) <10 mPa·s, mercapto groups (SH) content of 36.2% and an SH functionality of 3.

## Example 1

### Preparation of mixture

10 g IPDI, 10g $H_{12}$MDI, 20g HDI trimer, 25 g 2,3-bis(thio(2-mercaptoethyl))-1-n-propanethiol, 33 mg DBTL and 0.13 g Zelec® UN were homogenized within 1 min using a high-speed mixer (DAC 400.1 FVZ from Hauschild Corporation) at 2500-3500 rpm to obtain a homogeneous mixture.

### Determination of reaction temperature

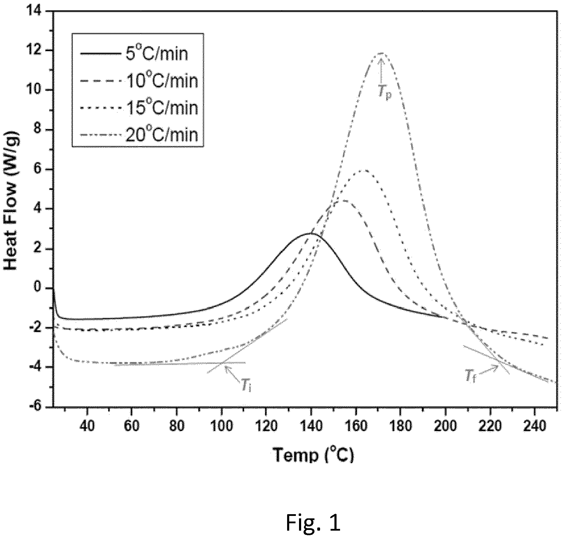

4 groups of 5-10 mg of the homogeneous mixture were taken. The four groups of the mixture were encapsulated into four liquid-dedicated crucibles for differential scanning calorimeters, respectively. After balancing at 20°C, the four groups of the homogeneous mixture were heated from 20°C to 250°C at heating rates of 5, 10, 15 and 20°C/min, respectively. Heat flows at different temperatures were measured using a differential scanning calorimeter, and four reaction heat flow-temperature curves of the mixture at different heating rates were recorded. The results were shown in Fig. 1.

The temperature corresponding to the intersection point of the baseline at the left side of the exothermic peak of the heat flow-temperature curve and the tangent line drawn at the maximum slope at the beginning of curve transition in Fig. 1 is determined as the theoretical initial temperature $T_i$; the temperature corresponding to the highest point of the heat flow-temperature curve (the peak of the curve) in Fig. 1 is determined as the theoretical peak temperature $T_p$; and the temperature corresponding to the intersection point of the baseline at the right side of the exothermic peak of the heat flow-temperature curve and the tangent line drawn at the maximum slope at the end of curve transition in Fig. 1 is determined as the theoretical final temperature $T_f$. The corresponding $T_i$, $T_p$ and $T_f$ values of the four heat flow-temperature curves were shown in Table 1.

Table 1: the temperature of the mixture of Example 1 at different heating rates

| Heating rate (°C/min) | $T_i$ (°C) | $T_p$ (°C) | $T_f$ (°C) |
|---|---|---|---|
| 5 | 85.9 | 139.8 | 179.0 |
| 10 | 98.5 | 155.1 | 195.8 |
| 15 | 106.3 | 164.2 | 216.3 |
| 20 | 109.9 | 171.5 | 223.3 |

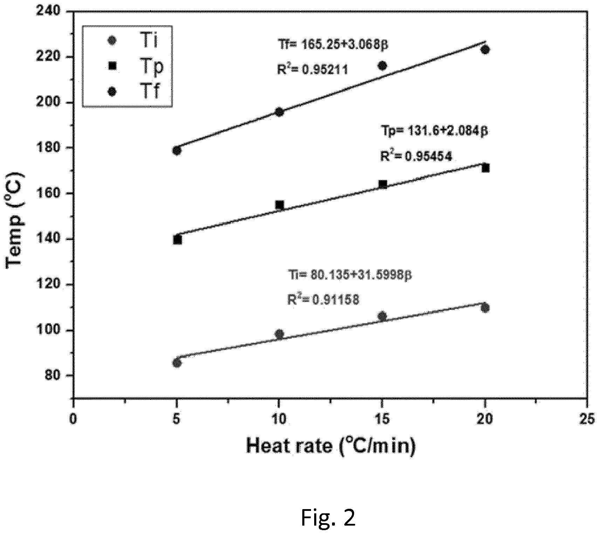

A $T_i$-$\beta$ curve was plotted with $T_i$ shown in Table 1 as a vertical axis and the heating rate ($\beta$) as a horizontal axis; a $T_p$-$\beta$ curve was plotted with $T_p$ shown in Table 1 as a vertical axis and the heating rate ($\beta$) as a horizontal axis; and a $T_f$-$\beta$ curve was plotted with $T_f$ shown in Table 1 as a vertical axis and the heating rate ($\beta$) as a horizontal axis. The curves were shown in Fig. 2.

Each of the $T_i$-$\beta$ curve, the $T_p$-$\beta$ curve and the $T_f$-$\beta$ curve in Fig. 2 follows a linear relationship. The minimum theoretical initial temperature $T_{i0}$ of 80°C, the minimum theoretical peak temperature $T_{p0}$ of 130.9°C and the minimum theoretical final temperature $T_{f0}$ of more than 130°C were obtained by extrapolating $\beta$ to zero, respectively.

$$T_{ia}=T_{i0}=80°C, \ T_{pa}=120°C \ and \ T_{fa}=130°C.$$

The homogeneous mixture was degassed at a vacuum degree of 5-15 mbar for 30-60 min, filtered and then cast into a glass mold. The homogeneous mixture was then reacted in an oven, which was specifically as follows: the homogeneous mixture was heated from 25°C to 80°C over 4 h and maintained at 80°C for 5 h, then slowly heated from 80°C to 120°C over 4 h and maintained at 120°C for 3 h, then heated to 130°C over 2 h and maintained at the temperature for 2 h, and finally cooled from 130°C to 70°C over 1 h to obtain a polyurethane resin.

The polyurethane resin was demolded and subjected to annealing treatment, which specifically comprised the following steps: the polyurethane resin was maintained at 130°C for 2 h and then cooled to 70°C over 1 h to obtain the annealed polyurethane resin.

Comparative Example 1 (the system was the same as that in Example 1, but the reaction was different)

Preparation of mixed solution

10 g IPDI, 10 g $H_{12}$MDI, 20 g HDI trimer, 25 g 2,3-bis(thio(2-mercaptoethyl))-1-n-propanethiol, 0.033 g DBTL and 0.13 g Zelec® UN were homogenized within 1 min using a high-speed mixer (DAC 400.1 FVZ from Hauschild Corporation) at 2500-3500 rpm to obtain a homogeneous mixture.

Empirical determination of reaction temperature

The initial reaction temperature was 35°C, the peak reaction temperature was 40°C and the final reaction temperature was 120°C.

The homogeneous mixture was degassed at a vacuum degree of 5-15 mbar for 30-60 min, filtered and then cast into a glass mold. The homogeneous mixture was then reacted in an oven, which was specifically as follows: the homogeneous mixture was heated from 25°C to 35°C over 0.5 h and maintained at the temperature for 2 h, then slowly heated from 35°C to 40°C over 3 h, then heated to 120°C over 12 h and maintained at the temperature for 2 h, and finally cooled from 120°C to 70°C over 2 h to obtain a comparative polyurethane resin.

The polyurethane resin was demolded and subjected to annealing treatment, which specifically comprised the following steps: the polyurethane resin was maintained at 130°C for 2 h and then cooled to 70°C over 1 h to obtain the annealed comparative polyurethane resin.

Example 2

Preparation of mixture

20 g $H_{12}$MDI, 20 g HDI trimer, 23.79 g 2,3-bis(thio(2-mercaptoethyl))-1-n-propanethiol, 0.033 g DBTL and 0.13 g Zelec® UN were homogenized within 1 min using a high-speed mixer (DAC 400.1 FVZ from Hauschild Corporation) at 2500-3500 rpm to obtain a homogeneous mixture.

Determination of reaction temperature

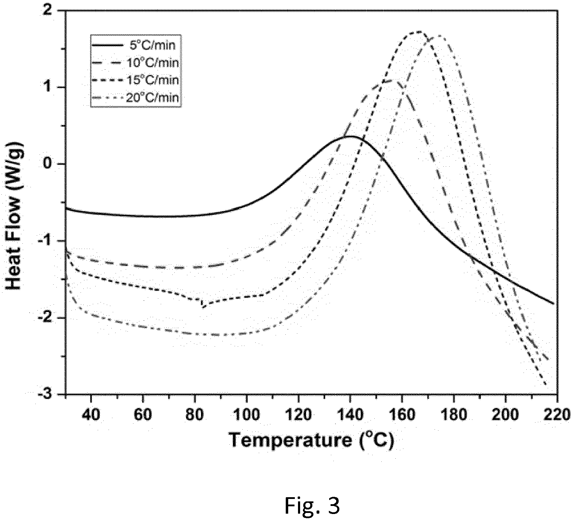

4 groups of 5-10 mg of the homogeneous mixture were taken. The four groups of the mixed solution were encapsulated into four liquid-dedicated crucibles for differential scanning calorimeters, respectively. After balancing at 20°C, the four groups of the homogeneous mixture were heated from 20°C to 220°C at heating rates of 5, 10, 15 and 20°C/min, respectively. Heat flows at different temperatures were measured using a differential scanning calorimeter, and four reaction heat flow-temperature curves of the mixture at different heating rates were recorded. The results were shown in Fig. 3.

The temperature corresponding to the intersection point of the baseline at the left side of the exothermic peak of the heat flow-temperature curve and the tangent line drawn at the maximum slope at the beginning of curve transition in Fig. 3 is determined as the theoretical initial temperature $T_i$; the temperature corresponding to the highest point of the heat flow-temperature curve (the peak of the curve) in Fig. 3 is determined as the theoretical peak temperature $T_p$; and the temperature corresponding to the intersection point of the baseline at the right side of the exothermic peak of the heat flow-temperature curve and the tangent line drawn at the maximum slope at the end of curve transition in Fig. 3 is determined as the theoretical final temperature $T_f$. The corresponding $T_i$, $T_p$ and $T_f$ values of the four heat flow-temperature curves were shown in Table 2.

Table 2: the temperature of the mixture of Example 2 at different heating rates

| Heating rate (°C/min) | $T_i$ (°C) | $T_p$ (°C) | $T_f$ (°C) |
|---|---|---|---|
| 5 | 84.9 | 140.03 | 205.67 |
| 10 | 88.3 | 156.30 | 198.42 |
| 15 | 103.5 | 166.94 | 191.72 |
| 20 | 107.0 | 174.51 | 183.37 |

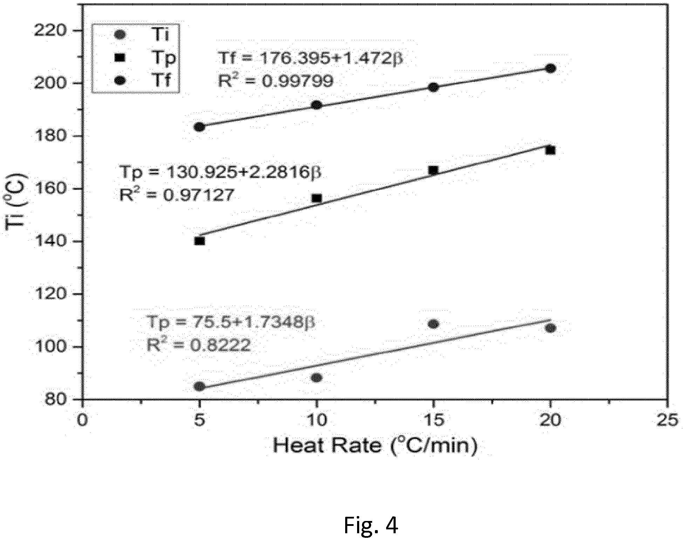

A $T_i$-β curve was plotted with $T_i$ shown in Table 2 as a vertical axis and the heating rate (β) as a horizontal axis; a $T_p$-β curve was plotted with $T_p$ shown in Table 2 as a vertical axis and the heating rate (β) as a horizontal axis; and a $T_f$-β curve was plotted with $T_f$ shown in Table 2 as a vertical axis and the heating rate (β) as a horizontal axis. The curves were shown in Fig. 4.

Each of the $T_i$-β curve, the $T_p$-β curve and the $T_f$-β curve in Fig. 4 follows a linear relationship. The minimum theoretical initial temperature $T_{i0}$ of 75.5°C, the minimum theoretical peak temperature $T_{p0}$ of 130.9°C and the minimum theoretical final temperature $T_{f0}$ of more than 130°C were obtained by extrapolating β to zero, respectively.

$$T_{ia}=T_{i0}=75.5°C, T_{pa}=120°C \text{ and } T_{fa}=130 °C.$$

The homogeneous mixture was degassed at a vacuum degree of 5-15 mbar for 30-60 min, filtered and then cast into a glass mold. The homogeneous mixture was then reacted in an oven, which was specifically as follows: the homogeneous mixture was heated from 25°C to 75°C over 4 h and maintained at 75°C for 6 h, then slowly heated from 75°C to 120°C over 5 h and maintained at 120°C for 2 h, then heated to 130°C over 2 h and maintained at the temperature for 2 h, and finally cooled from 130°C to 70°C over 1 h to obtain a polyurethane resin.

The polyurethane resin was demolded and subjected to annealing treatment, which specifically comprised the following steps: the polyurethane resin was maintained at 130°C for 2 h and then cooled to 70°C over 2 h to obtain the annealed polyurethane resin.

Comparative Example 2 (the system was the same as that in Example 2, but the reaction was different)

Preparation of mixture 20 g $H_{12}$MDI, 20 g HDI trimer, 23.79 g 2,3-bis(thio(2-mercaptoethyl))-1-n-propanethiol, 0.033 g DBTL and 0.13 g Zelec® UN were homogenized within 1 min using a high-speed mixer (DAC 400.1 FVZ from Hauschild Corporation) at 2500-3500 rpm to obtain a homogeneous mixture.

Empirical determination of reaction temperature

The initial reaction temperature was 40°C, the peak reaction temperature was 60°C and the final reaction temperature was 120°C.

The homogeneous mixture was degassed at a vacuum degree of 5-15 mbar for 30-60 min, filtered and then cast into a glass mold. The homogeneous mixture was then reacted in an oven, which was specifically as follows: the homogeneous mixture was heated from 25°C to 40°C over 3 h, then slowly heated from 40°C to 60°C over 3 h and maintained at the temperature for 4 h, then heated to 120°C over 6 h and maintained at the temperature for 2 h, and finally cooled from 120°C to 70°C over 1 h to obtain a comparative polyurethane resin.

The polyurethane resin was demolded and subjected to annealing treatment, which specifically comprised the following steps: the polyurethane resin was maintained at 130°C for 2 h and then cooled to 70°C over 2 h to obtain the annealed comparative polyurethane resin.

Performance testing

Impact strength (before film coating): a measurement was carried out at 23°C using falling ball test; and in the falling ball test on 5 lenses (lenses before film coating (-0.00, center thickness: 2 mm)) made of the annealed polyurethane resins of the Examples and Comparative Examples of the invention, steel balls with different weight (16 g, 33 g, 67 g, 90 g, 110 g, 150 g, 190 g, 227 g and 255 g) were allowed to fall on the surfaces of the lens from a height of 127 cm, respectively, wherein impact strength (before film coating) was represented by the weight of the heaviest steel ball sustainable by the lenses.

Refractive index was measured at 23°C using an AR-series Abbe refractometer from Zeiss AG, wherein naphthalene bromide was used as a contact fluid of a test lens.

Density was measured using a Model BSA224S balance from the company Sartorius according to the Archimedes method.

Glass transition temperature (Tg) was measured at a heating rate of 10 °C/min by differential scanning calorimetry using a Model Auto Q20 DSC from TA Instruments, Inc.

The absorption peak of the NCO group was measured by infrared spectrometry, and an infrared spectrum pattern of the polyurethane resin was obtained using a Frontier™-series Fourier transform infrared spectrometer from PerkinElmer, Inc., wherein the peak at 2261 cm$^{-1}$ was the absorption peak of the NCO group.

The annealed polyurethane resins of the Examples and Comparative Examples were tested with regard to their impact strength, glass transition temperature, density and refractive index. The performance data were listed in Table 3.

Table 3: the performance comparison between the polyurethane resins of the Examples and Comparative Examples

|  | Density (g/cm$^3$) | Refractive index | Impact strength (g) | Glass transition temperature (°C) |
|---|---|---|---|---|
| Example 1 | 1.250 | 1.595 | 227 | 111.0 |
| Comparative Example 1 | 1.250 | 1.595 | 110 | 98.92 |
| Example 2 | 1.250 | 1.593 | 110 | 108.03 |
| Comparative Example 2 | 1.250 | 1.593 | 90 | 96.52 |

The comparison between Example 1 and Comparative Example 1 shows that the polyurethane resin of Example 1 is substantially improved in terms of its impact strength and glass transition temperature, indicating that the polyurethane resin of Example 1 have good mechanical properties and heat resistance. The same results can be obtained through the comparison between Example 2 and Comparative Example 2, i.e. the polyurethane resin of Example 2 is superior to that of Comparative Example 2 in terms of mechanical properties.

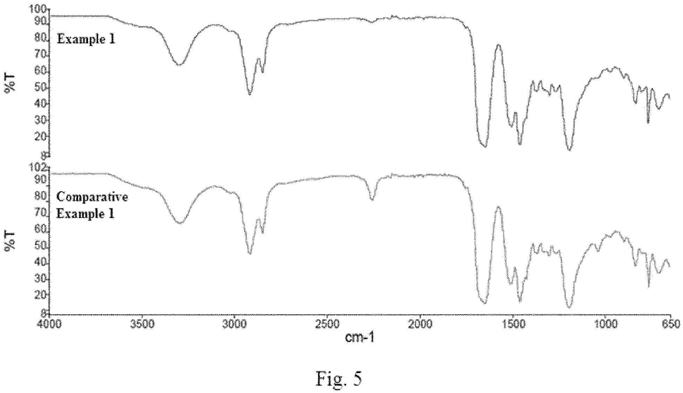

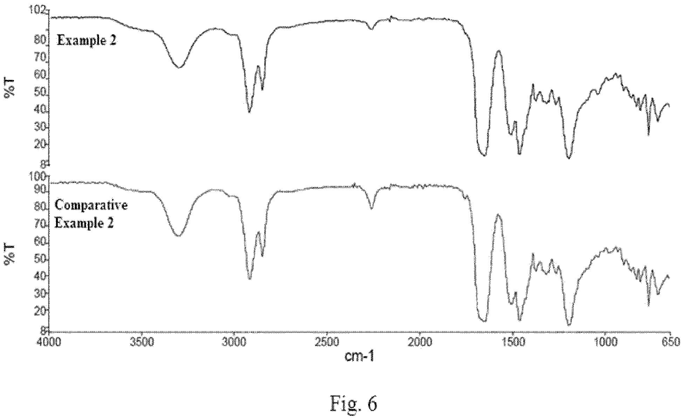

The annealed polyurethane resins of the Examples and Comparative Examples were tested with regard to their infrared spectra. The infrared spectra of the polyurethane resins of Example 1 and Comparative Example 1 were listed in Fig. 5. The infrared spectra of the polyurethane resins of Example 2 and Comparative Example 2 were listed in Fig. 6.

It can be seen from Fig. 5 that the absorption peak of the NCO group in the polyurethane resin of Example 1 is significantly reduced as compared with the absorption peak of the NCO group in the polyurethane resin of Comparative Example 1, indicating that the residual amount of the NCO group in the polyurethane resin of Example 1 is far less than that in Comparative Example 1, thus indicating that the conversion and crosslinking rates of the system for preparing a polyurethane resin in Example 1 are far higher than those in Comparative Example 1, and the prepared polyurethane resin has good mechanical properties and heat resistance.

It can be seen from Fig. 6 that the absorption peak of the NCO group in the polyurethane resin of Example 2 is significantly reduced as compared with the absorption peak of the NCO group in the polyurethane resin of Comparative Example 2, indicating that the residual amount of the NCO group in the polyurethane resin of Example 2 is far less than that in Comparative Example 2, thus indicating that the conversion and crosslinking rates of the system for preparing a polyurethane resin in Example 2 are far higher than those in Comparative Example 2, and the prepared polyurethane resin has good mechanical properties and heat resistance.

It is apparent to those skilled in the art that the present invention is not limited to the foregoing specific details, and the present invention may be implemented in other specific forms without departing from the spirit or main characteristics thereof. Accordingly, the above examples should be considered illustrative rather than limiting from any perspective, thus the scope of the invention is indicated by the claims rather than the above description, and any change should be considered belonging to the invention as long as the change belongs to the meaning and scope of the equivalents of the claims.

## Claims

1. A method for preparing a polyurethane resin comprising reacting a system comprising an isocyanate and an isocyanate-reactive compound to obtain the polyurethane resin, the initial reaction temperature $T_{ia}$, the peak reaction temperature $T_{pa}$ and the final reaction temperature $T_{fa}$ of the reaction being determined by measuring heat flows at different temperatures of the system at different heating rates and plotting heat flow-temperature curves at the different heating rates.

2. The method according to claim 1, wherein the reaction time is 17-34 h.

3. The method according to claim 1, wherein the different heating rates comprise at least three different heating rates in a gradient relationship.

4. The method according to claim 3, wherein the initial reaction temperature $T_{ia}$, the peak reaction temperature $T_{pa}$ and the final reaction temperature $T_{fa}$ are determined by the steps of:

   heating the system to 200-250°C at the heating rates, measuring heat flows at different temperatures of the system, and plotting reaction heat flow-temperature curves at different heating rates with heat flow as a vertical axis and temperature as a horizontal axis;
   reading a set of theoretical initial temperatures $T_i$, a set of theoretical peak temperatures $T_p$ and a set of theoretical final temperatures $T_f$ at different heating rates from the reaction heat flow-temperature curves;
   plotting a $T_i$ curve with the theoretical initial temperature $T_i$ as a vertical axis and the heating rate as a horizontal axis; plotting a $T_p$ curve with the theoretical peak temperature $T_p$ as a vertical axis and the heating rate as a horizontal axis; and plotting a $T_f$ curve with the theoretical final temperature $T_f$ as a vertical axis and the heating rate as a horizontal axis; and
   reading the temperature at the heating rate of 0 °C/min from the $T_i$ curve and recording the temperature as the minimum theoretical initial temperature $T_{i0}$; reading the temperature at the heating rate of 0 °C/min from the $T_p$ curve and recording the temperature as the minimum theoretical peak temperature $T_{p0}$; and reading the temperature at the heating rate of 0 °C/min from the $T_f$ curve and recording the temperature as the minimum theoretical final temperature $T_{f0}$; wherein
   $T_{ia}=T_{i0}$; $T_{pa}=T_{p0}$; and $T_{fa}=T_{f0}$.

5. The method according to claim 4, wherein the peak reaction temperature $T_{pa}$ and the final reaction temperature $T_{fa}$ are further adjusted as follows: $T_{p0}-15<T_{pa}<T_{p0}-5$; $T_{fa}=T_{f0}$ when $T_{f0}<130°C$; and $T_{fa}=130°C$ when $T_{f0}\geq130°C$.

6. The method according to claim 5 comprising the steps of:

   a. heating the system from the initial system temperature to the initial reaction temperature $T_{ia}$ over 4-8 h and maintaining the temperature for 4-8 h;

b. heating the solution obtained in the step a from $T_{ia}$ to the adjusted peak reaction temperature $T_{pa}$ over 4-8 h and maintaining the temperature 2-4 h;

c. heating the solution obtained in the step b from the adjusted peak reaction temperature $T_{pa}$ to the adjusted final reaction temperature $T_{fa}$ over 1-2 h and maintaining the temperature 1-2 h; and

d. cooling the solution obtained in the step c to 60-80°C over 1-2 h to obtain the polyurethane resin.

7. The method according to claim 6 further subjecting the polyurethane resin to annealing treatment.

8. A polyurethane resin obtained by implementing the method according to any one of claims 1-7.

9. The polyurethane resin according to claim 8, wherein the polyurethane resin has an impact strength of not less than 110 g and a glass transition temperature of not less than 105°C.

10. Use of the polyurethane resin according to any one of claims 8-9 in the preparation of a molded article.

11. The use according to claim 10, wherein the molded article is an optical lens, most preferably an eyeglass lens.

Fig. 1

Fig. 2

Fig. 3

Fig. 4

Fig. 5

Fig. 6

| Europäisches Patentamt<br>European Patent Office<br>Office européen des brevets | **EUROPEAN SEARCH REPORT** | Application Number<br>EP 17 20 1706 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X,D | CN 105 254 907 A (YELLOW RIVER DELTA JINGBO RES INST CHEMICAL IND CO LTD) 20 January 2016 (2016-01-20)<br>* abstract *<br>* figures 1-4 * | 1-11 | INV.<br>C08G18/00<br>C08L75/04 |
| X,D | EP 1 640 394 A1 (HOYA CORP [JP]) 29 March 2006 (2006-03-29)<br>* abstract *<br>* comparative example 1; page 114; figure 3 * | 1-11 | |
| X | EP 2 660 262 A2 (KOC SOLUTION CO LTD [KR]) 6 November 2013 (2013-11-06)<br>* abstract *<br>* page 5; example 1 * | 1-11 | |

TECHNICAL FIELDS
SEARCHED (IPC)

C08G
C08L

The present search report has been drawn up for all claims

| Place of search | Date of completion of the search | Examiner |
|---|---|---|
| Munich | 11 January 2018 | Bissmire, Stewart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 1706

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2018

| Patent document cited in search report | | Publication date | Patent family member(s) | | Publication date |
|---|---|---|---|---|---|
| CN 105254907 | A | 20-01-2016 | NONE | | |
| EP 1640394 | A1 | 29-03-2006 | AU | 2004245410 A1 | 16-12-2004 |
| | | | CA | 2528937 A1 | 16-12-2004 |
| | | | EP | 1640394 A1 | 29-03-2006 |
| | | | JP | 4898222 B2 | 14-03-2012 |
| | | | JP | WO2004108786 A1 | 27-07-2006 |
| | | | KR | 20060016798 A | 22-02-2006 |
| | | | US | 2006155093 A1 | 13-07-2006 |
| | | | US | 2010234552 A1 | 16-09-2010 |
| | | | WO | 2004108786 A1 | 16-12-2004 |
| EP 2660262 | A2 | 06-11-2013 | CN | 103282400 A | 04-09-2013 |
| | | | EP | 2660262 A2 | 06-11-2013 |
| | | | JP | 5876077 B2 | 02-03-2016 |
| | | | JP | 6077146 B2 | 08-02-2017 |
| | | | JP | 2014502657 A | 03-02-2014 |
| | | | JP | 2016153478 A | 25-08-2016 |
| | | | KR | 20120076329 A | 09-07-2012 |
| | | | KR | 20140046433 A | 18-04-2014 |
| | | | US | 2013303721 A1 | 14-11-2013 |
| | | | WO | 2012091493 A2 | 05-07-2012 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105254907 A
- EP 1640394 A
- JP 07118263 A

**Non-patent literature cited in the description**

- Study on Reaction Kinetics and Reaction Process of Unsaturated Polyester Resin by DSC. *Fiber Glass,* 2011, vol. 5, 16-20
- Study on Curing Reaction Kinetics and Curing Process of Polyisocyanate/Epoxy Resin Adhesive by DSC. *Sichuan Chemical Industry,* 2006, vol. 2 (9), 1-4